Europäisches Patentamt

European Patent Office

Office européen des brevets

(11) Veröffentlichungsnummer: **0 297 364**
**A1**

## (12) EUROPÄISCHE PATENTANMELDUNG

(21) Anmeldenummer: 88109638.2

(22) Anmeldetag: 16.06.88

(51) Int. Cl.⁴: **C08K 3/04 , C08L 25/06 ,**
**//(C08L25/06,29:10)**

(30) Priorität: 26.06.87 DE 3721124

(43) Veröffentlichungstag der Anmeldung:
**04.01.89 Patentblatt 89/01**

(84) Benannte Vertragsstaaten:
**BE DE GB NL**

(71) Anmelder: **BASF Aktiengesellschaft**
**Carl-Bosch-Strasse 38**
**D-6700 Ludwigshafen(DE)**

(72) Erfinder: **Hoenl, Hans, Dr.**
**Hauptstrasse 69 a**
**D-6719 Obersuelzen(DE)**

(54) **Elektrisch leitende thermoplastische Formmassen, Verfahren zu ihrer Herstellung und ihre Verwendung.**

(57) Die Erfindung betrifft eine elektrisch leitende thermoplastische Formmasse enthaltend, jeweils bezogen auf die Formmasse aus A + B + C,

    A        40 bis 98 Gew.% mindestens eines Styrol und/oder substituiertes Styrol enthaltenden Polymerisates,

    B   1 bis 30 Gew.% Ruß und

    C   1 bis 30 Gew.% eines weiteren Polymerisates.

Charakteristisch ist, daß als Polymerisat C mindestens ein Polyvinylalkylether mit 1 bis 4 C-Atomen in der Alkylgruppe verwendet wird, der ein Molekulargewicht (Gewichtsmittel) im Bereich von 20.000 bis 200.000 aufweist.

Die Formmasse wird verwendet zur Herstellung von Formteilen.

EP 0 297 364 A1

## Elektrisch leitende thermoplastische Formmassen, Verfahren zu ihrer Herstellung und ihre Verwendung

Die Erfindung betrifft eine elektrisch leitende thermoplastische Formmasse enthaltend, jeweils bezogen auf die Formmasse aus A + B + C,

A        40 bis 98 Gew.% mindestens eines Styrol und/oder substituiertes Styrol enthaltenden Polymerisates,

B        1 bis 30 Gew.% Ruß und

C        1 bis 30 Gew.% eines weiteren Polymerisates.

Zum Stand der Technik werden genannt

(1) US-PS 3 591 526 und

(2) Deutsche Patentanmeldung P 36 43 008.0

Es sind bereits verschiedene thermoplastische Formmassen bekannt, die aufgrund ihres Gehalts an elektrisch leitfähigem Ruß eine ausreichende elektrische Leitfähigkeit besitzen, um Formkörper mit befriedigenden elektrischen Eigenschaften herstellen zu können. Diese Formmassen müssen jedoch einen sehr hohen Rußgehalt aufweisen, damit die aus ihnen hergestellten Formkörper die gewünschten elektrischen Eigenschaften erhalten. Ein derart hoher Rußanteil führt aber in der Regel bei der Formmasse zu deutlich verminderten mechanischen Eigenschaften.

Es sind aus der unter (1) zitierten US-PS Mischungen unverträglicher Thermoplaste bekannt, wobei einem der beiden Thermoplasten vor dem Mischvorgang Ruß zugemischt wurde. Die elektrische Leitfähigkeit und die mechanische Qualität solcher Mischungen lassen jedoch zu wünschen übrig.

In (2) sind rußhaltige Mischungen zweier unverträglicher Thermoplaste beschrieben, die durch einen Gehalt eines Mischungsvermittlers gekennzeichnet sind und ausreichende mechanische Qualitäten aufweisen.

Der Erfindung liegt daher die Aufgabe zugrunde, eine rußhaltige thermoplastische Formmasse mit weiter verbesserten mechanischen Eigenschaften herzustellen.

Diese Aufgabe wird gelöst durch eine Formmasse gemäß Anspruch 1.

Die Erfindung betrifft daher eine elektrisch leitende thermoplastische Formmasse enthaltend, jeweils bezogen auf die Formmasse aus A + B + C,

A        40 bis 98 Gew.% mindestens eines Styrol und/oder substituiertes Styrol enthaltenden Polymerisates,

B        1 bis 30 Gew.% Ruß und

C        1 bis 30 Gew.% eines Polymerisates.

Die Formmasse ist dadurch gekennzeichnet, daß als Polymerisat C mindestens ein Polyvinylalkylether mit 1 bis 4 C-Atomen in der Alkylgruppe verwendet wird, der ein Molekulargewicht (Gewichtsmittel) im Bereich von 20.000 bis 200.000 aufweist.

Nachstehend werden der Aufbau der erfindungsgemäßen Formmasse aus den Komponenten, die Herstellung der Komponenten und die Herstellung der Formmasse beschrieben.

Die Formmasse enthält die Komponenten A, B und C; vorzugsweise besteht sie aus ihnen. Ferner kann die Formmasse als Komponente D übliche Zusatzstoffe enthalten.

Bezogen auf die Formmasse aus A + B + C enthält sie:

A     40 bis 98 Gew.%, vorzugsweise 60 bis 95 Gew.%;

B     1 bis 30 Gew.%, vorzugsweise 2 bis 10 Gew.%;

C     1 bis 30 Gew.%, vorzugsweise 2 bis 10 Gew.%.

Bezogen auf 100 Gew.-Teile A + B + C können noch zugegen sein:

D     0,05 bis 30 Gew.-Teile, vorzugsweise 0,10 bis 10 Gew.-Teile

Komponente A

Als Komponente A der erfindungsgemäßen Formmasse kommen Homopolymerisate oder Copolymerisate von Styrol mit einem der eng verwandten, insbesondere methylsubstituierten Styrole in Frage, in denen ein Methylrest als Substituent am aromatischen Ring oder an der Seitenkette vorhanden ist. Hier ist vor allem p-Methylstyrol zu erwähnen. Diese Copolymerisate können aus den bekannten Mengenverhältnissen Styrol bzw. substituiertem Styrol in an sich bekannter Weise hergestellt werden. Als Styrolpolymerisate kommen ferner Pfropfmischpolymerisate in Frage, die durch Polymerisation von Styrol oder substituiertem Styrol in Gegenwart eines Kautschuks, z.B. eines Butadienpolymerisats oder kautschukartigen Styrol-Butadien-Copolymerisats, hergestellt werden. Der Polybutadiengehalt kann, bezogen auf A, 3 bis 20 Gew.%, vorzugsweise 5 bis 12 Gew.%, betragen. Der Kautschuk liegt dabei fein dispergiert in einer als Hartmatrix bezeichneten Polystyrolphase vor. Die Herstellung derartiger schlagfester Polystyrole ist dem Fachmann bekannt. Polystyrole und Polymerisate substituierter Styrole sind, ebenso wie die schlagfesten Polystyrole, im Handel erhältlich. Die Viskositätszahl der Komponente A soll im Bereich von 60 bis 120 ml/g (0,5 %ig in Toluol bei 23° C) liegen.

Ferner seien genannt die 70 bis 90 Gew.% Styrol und 10 bis 30 Gew.% Acrylnitril enthaltenden Copolymerisate, wie SAN mit VZ von 70 bis 110, sowie die Pfropfcopolymerisate von Styrol und Acrylnitril auf Polybutadien (ABS). Alle diese Produkte sind im Handel erhältlich.

Komponente B

Als Ruß im Sinne der vorliegenden Erfindung soll mikrokristalliner, feinteiliger Kohlenstoff verstanden werden (vgl. Kunststofflexikon, 7. Aufl. 1980).

Als geeignet seien die Ofenruße, Acetylenruße, Gasruße sowie die durch thermische Herstellung erhältlichen Thermalruße genannt.

Die Teilchengrößen liegen vorzugsweise im Bereich von 0,01 bis 0,1 µm und die Oberflächen im Bereich von $10^2$ bis $10^4$ m²/g (BET/ASTM D 3037) bei DBP-Absorptionen von $10^2$ bis $10^3$ ml/100 g (ASTM D 2414).

Komponente C

Als Komponente C der erfindungsgemäßen Formmasse kommen Polyvinylalkylether mit 1 bis 4 C-Atomen im Alkylrest oder Mischungen von Polyvinylalkylethern in Frage. Bevorzugt wird Polyvinylmethylether oder Polyvinylethylether. Das Molekulargewicht (Gewichtsmittel) der Polyvinylalkylether liegt im Bereich von 20.000 bis 200.000, vorzugsweise von 40.000 bis 80.000.

Komponente D

Die erfindungsgemäße Formmasse kann als Komponente D Zusatzstoffe enthalten, die für die Komponenten A, B und C typisch und gebräuchlich sind. Als solche Zusatzstoffe seien beispielsweise genannt: Füllstoffe, Farbstoffe, Pigmente, Antistatika, Antioxidantien, auch Flammschutzmittel und insbesondere die Schmiermittel, die für die Weiterverarbeitung der Formmasse, z.B. bei der Herstellung von Formkörpern bzw. Formteilen erforderlich sind.

Weiterhin können als Komponente D zusätzlich zu den bei der Komponente A zugelassenen Kautschuken und Pfropfmischpolymerisaten Schlagzähmodifier eingesetzt werden. So kann Komponente D mindestens ein Styrol und Butadien bzw. Isopren enthaltendes Blockcopolymerisat darstellen. Dies kann selektiv hydriert sein, so daß die vom Dien stammenden Doppelbindungen zu mehr als 90 % abgesättigt sind. Diese Blockcopolymerisate können durch lineare Zweiblockcopolymerisate oder deren Kopplungsprodukte, die sternförmig verzweigten Blockcopolymerisate, repräsentiert werden, wobei letztere mono- oder polymodal aufgebaut sein können.

Besonders geeignet können Blockcopolymerisate aus der Gruppe der linearen Butadien-Styrol-Zweiblockcopolymerisate mit verschmiertem Übergang, der linearen Isopren-Styrol-Zweiblockcopolymerisate und der radialen Butadien-Styrol-Blockcopolymeren sein, wobei diese 60 bis 35 Gew.% Styrol (Rest Dien) bei Gesamtmolekulargewichten im Bereich von 40.000 bis 250.000 enthalten.

Die Komponente D kann insbesondere auch ein lineares, aus Styrol und Butadien bestehendes, Blockcopolymerisat mit verschmiertem Übergang darstellen, das in an sich bekannter Weise selektiert hydriert worden ist, wobei lediglich die vom Monomerenbaustein Butadien herrührenden Doppelbindungen zu mehr als 90 %, insbesondere zu mehr als 97 %, abgesättigt werden. Derartige Verfahren zur Hydrierung sind an sich bekannt und können z.B. nach dem in der DE-OS 27 48 884 beschriebenen Verfahren durchgeführt werden.

Wesentlich für den Aufbau des in Rede stehenden Blockcopolymerisats vor der Hydrierung ist, daß der Gesamtstyrolgehalt des Blockcopolymerisats im Bereich von 40 bis 60 Gew.%, vorzugsweise 50 bis 55 Gew.%, bezogen auf D, liegt, und daß 5 bis 25 Gew.% des Blockcopolymerisats D als Blockpolystyrol vorliegen und der Rest des Styrols in 60 bis 40 Gew.%, vorzugsweise 50 bis 45 Gew.% Butadien, statisti-

EP 0 297 364 A1

sch eingebaut vorliegt, wobei das Blockcopolymerisat D ein mittleres Molekulargewicht (Gewichtsmittel) von 50.000 bis 200.000, vorzugsweise 75.000 bis 150.000 aufweist.

Die Herstellung derartiger Blockcopolymerisate ist an sich bekannt und erfolgt durch anionische Polymerisation von Mischungen aus Butadien und Styrol in Gegenwart von Li-alkylinitiatoren und von allerdings nur geringen Mengen an THF (am besten ohne THF). Sie können z.B. nach dem in der DE-OS 31 06 959 beschriebenen Verfahren hergestellt werden, wobei insbesondere adiabatisch in einer Verfahrensstufe gearbeitet wird (Beispiel 2).

Herstellung der Formmasse

Die Herstellung der Formmasse erfolgt durch Mischen der Komponenten A, B und C und gegebenenfalls D nach allen bekannten Methoden, wobei jedoch vorzugsweise zunächst die Komponenten B und C vorgemischt werden. Hierfür kommen Buss-Kneter, Brabender, ZSK-Extruder, Turbomischer, Walzaggregate u.ä. in Frage.

Die in der vorliegenden Anmeldung beschriebenen Parameter werden wie folgt bestimmt:
1. Schlagzähigkeit, SZ, in [kJ/m$^2$] nach DIN 53 453
2. Spezifischer Durchgangswiderstand, R, in [$\Omega \cdot$cm] nach DIN 53 482

Für die Herstellung erfindungsgemäßer Formmassen und von Vergleichsproben wurden die nachfolgend beschriebenen Produkte verwendet:

Komponente A

A' Ein schlagfestes Polystyrol mit einem Polybutadiengehalt von 7,5 Gew.%, mittlere Teilchengröße der Weichphase 2,7 μm (Mittelwert: 50 Volumenprozent der als Weichphase vorliegenden Kautschukartikel liegen oberhalb dieses Wertes und 50 Volumenprozent unterhalb dieses Wertes), enthaltend 0,1 Gew.% eines sterisch gehinderten Phenols als Antioxidans und 6,9 Gew.% Weißöl als Schmiermittel, VZ der Hartmatrix 70 ml/g.

Komponente B

B' Leitfähigkeitsruß ®PRINTEX XE2 (Degussa AG)
BET-Oberfläche (ASTM D 3037): 1000 m$^2$/g
DBP-Absorption (ASTM D 2414): 370 ml/100 g

Komponente C

C' Polyvinylmethylether ®Lutonal M 40 der BASF AG
Molekulargewicht 20.000 (Zahlenmittel) bzw. 60.000 (Gewichtsmittel)

Die Komponenten B und C wurden in den Beispielen als Mischungen im Gewichtsverhältnis 1:1 angewendet. Diese Mischungen wurden aus Printex XE2 und Lutonal M 40 mittels eines Turbomischers der Fa. Drais bei 150°C hergestellt. Diese Mischung wird in der Tabelle als B/C bezeichnet.

Die Erfindung wird durch die nachfolgenden Beispiele und Vergleichsversuche näher erläutert. Die darin genannten Teile und Prozente beziehen sich, sofern nicht anders angegeben, auf das Gewicht.

Beispiele 1 und 2 und Vergleichsversuche I und II

Es wurden Mischungen in den in der Tabelle angegebenen Zusammensetzungen auf einem Weber-Extruder unter den nachfolgenden Bedingungen hergestellt:
Schnecke mit Mischtorpedo
2-Strangdüse
70 UPM
Kunststofftemperatur: 190°C

4

2 x konfektioniert

In der Tabelle sind auch die an gespritzten Prüfkörpern gemessenen Schlagzähigkeiten (SZ) und die an gepreßten Prüfkörpern gemessenen Werte spezifischen Durchgangswiderstände (R) wiedergegeben.

**Tabelle**

| Produkt | Vergleichs- versuch I | Beispiel 1 | Vergleichs- versuch II | Beispiel 2 |
|---|---|---|---|---|
| | Teile | Teile | Teile | Teile |
| A[1] | 95 | 90 | 80 | 60 |
| B[1] | 5 | 0 | 20 | 0 |
| B/C | 0 | 10 | 0 | 40 |
| | | | | |
| SZ (kJ/cm$^2$) | 18,4 | 21,4 | 3,9 | 13,6 |
| R (Ohmxcm) | $5,8 \times 10^2$ | $3,3 \times 10^2$ | 4,8 | 2,9 |

Den Werten der Tabelle ist zu entnehmen, daß bei gleichem Anteil an Leitfähigkeitsruß (5 Gew.% für Beispiel 1 und Vergleichsversuch I, 20 Gew.% für Beispiel 2 und Vergleichsversuch II) die vorhergehende Behandlung des Leitfähigkeitsrußes mit Polymethylvinylether den damit hergestellten Produkten eine verbesserte Schlagzähigkeit und einen geringeren elektrischen Widerstand verleiht.

**Ansprüche**

1. Elektrisch leitende thermoplastische Formmasse enthaltend, jeweils bezogen auf die Formmasse aus A + B + C,
A     40 bis 98 Gew.% mindestens eines Styrol und/oder substituiertes Styrol enthaltenden Polymerisates,
B     1 bis 30 Gew.% Ruß und
C     1 bis 30 Gew.% eines weiteren Polymerisates,
dadurch gekennzeichnet, daß als Polymerisat C mindestens ein Polyvinylalkylether mit 1 bis 4 C-Atomen in der Alkylgruppe verwendet wird, der ein Molekulargewicht (Gewichtsmittel) im Bereich von 20.000 bis 200.000 aufweist.
2. Formmasse nach Anspruch 1, enthaltend, bezogen auf 100 Gew.-Teile A + B + C, 0,05 bis 30 Gew.- Teile üblicher Zusatzstoffe (Komponente D).
3. Formmasse nach Anspruch 1 oder 2, dadurch gekennzeichnet, daß als Komponente C Polyvinylmethylether verwendet wird.
4. Formmasse nach Anspruch 1, dadurch gekennzeichnet, daß als Styrol enthaltendes Polymerisat ein solches verwendet wird, das einen Gehalt von 3 bis 20 Gew.% eines Kautschuks (in Form eines Pfropfpolymerisats) aufweist (schlagfestes Polystyrol).
5. Formmasse nach Anspruch 1 enthaltend, jeweils bezogen auf A + B + C, die Komponenten in den folgenden Anteilen:
A     60 bis 95 Gew.%
B     2 bis 10 Gew.% und
C     2 bis 10 Gew.%.
6. Verfahren zur Herstellung einer Formmasse gemäß Anspruch 1 durch Mischen der Bestandteile, dadurch gekennzeichnet, daß zunächst die Komponenten B und C gemischt werden und danach in die erhaltene Mischung die Komponente A, gegebenenfalls mit den Zusatzstoffen (Komponente D), eingemischt wird.
7. Verwendung der Formmasse gemäß Anspruch 1 zur Herstellung von Formteilen.
8. Formteile aus Formmassen gemäß Anspruch 1.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 571 928 (R.G. NEWBERG) <br> --- | | C 08 K 3/04 <br> C 08 L 25/06 // <br> (C 08 L 25/06 <br> C 08 L 29:10 ) |
| A | RUBBER CHEMISTRY AND TECHNOLOGY, Band 51, Nr. 5, November-Dezember 1978, Seiten 1075-1082, American Chemical Society Inc.; T. NISHI: "Application of pulsed NMR to elastomeric composite systems" <br> ----- | | |

RECHERCHIERTE SACHGEBIETE (Int. Cl.4)

C 08 K
C 08 L

Der vorliegende Recherchenbericht wurde für alle Patentansprüche erstellt

| Recherchenort | Abschlußdatum der Recherche | Prüfer |
|---|---|---|
| DEN HAAG | 03-10-1988 | DE LOS ARCOS Y VELAZQUEZ |